# EUROPÄISCHE PATENTSCHRIFT

(11) **EP 1 831 590 B1**
(45) Veröffentlichungstag und Bekanntmachung des Hinweises auf die Patenterteilung: **25.03.2009**
(21) Anmeldenummer: 05817897.1
(22) Anmeldetag: 16.12.2005
(51) Int. Cl.: F16H 57/02, F16H 57/08, F16H 1/32

(54) **VORRICHTUNG, INSBESONDERE EIN PLANETENGETRIEBE, MIT EINEM RINGARTIGEN GRUNDKÖRPER**
DEVICE, ESPECIALLY A PLANET GEAR, COMPRISING AN ANNULAR BASE BODY
DISPOSITIF, NOTAMMENT ENGRENAGE PLANETAIRE, COMPRENANT UN CORPS DE BASE EN ANNEAU

(30) Priorität: 20.12.2004 DE 102004062333
(43) Veröffentlichungstag der Anmeldung: 12.09.2007
(73) Patentinhaber: Spinea s.r.o., 08005 Presov (SK)
(72) Erfinder: JANEK, Bartolomej, 08001 Presov (SK)
(74) Vertreter: Jeck, Anton
(86) Internationale Anmeldenummer: PCT/EP2005/013561
(87) Internationale Veröffentlichungsnummer: WO 2006/066813

(56) Entgegenhaltungen:
- DE-A1- 1 920 227
- US-A- 4 861 171
- US-A- 5 066 267
- US-A- 5 908 372

## Beschreibung

Die Erfindung betrifft eine Vorrichtung, insbesondere ein Zykloidengetriebe, mit einem ringartigen Grundkörper sowie mit mindestens einem in Bezug auf den Grundkörper drehbar gelagerten Ausgangskörper gemäß dem Oberbegriff des Anspruchs 1.

Sowohl ein Planeten- als auch ein Zykloidengetriebe besteht im Wesentlichen aus einem Rad mit Innenverzahnung, das mindestens ein Rad mit Außenverzahnung so kämmt, dass die Achse des Rads mit Außenverzahnung gegenüber der Achse des Rads mit Innenverzahnung um einen Abstand e versetzt ist. Die Achse des Rads mit Außenverzahnung läuft dabei um die Achse des Rads mit Innenverzahnung um.

Ist das Rad mit Außenverzahnung auf einem koaxial zum Rad mit Innenverzahnung drehbar angeordneten Planetenträger angeordnet, und wird es mittels eines koaxial zum Rad mit Innenverzahnung angeordneten Ritzel, dem so genannten Sonnenrad, angetrieben, wird von einem Planetengetriebe gesprochen. Das in diesem Fall als Planetenrad bezeichnete Rad mit Außenverzahnung führt dabei eine so genannte Planetenbewegung aus, wobei es in dem Rad mit Innenverzahnung um das Sonnenrad umläuft. Rotation und Revolution des Planetenrads sind dabei entgegengesetzt, genau umgekehrt wie beim Umlauf der Erde um die Sonne oder des Monds um die Erde. Bei einem Planetengetriebe laufen nicht nur die Achsen der Planetenräder um die Achse des Rads mit Innenverzahnung, sondern auch die Planetenräder um das Sonnenrad um, d.h. es gibt keine Überschneidung zwischen der Achse des Rads mit innenverzahnung und den Planetenrädern. Die Umlaufbewegung eines Planetenrads kann mittels des Planetenträgers direkt in eine Drehbewegung beispielsweise der Ausgangswelle umgewandelt werden.

Aus US 5,385,514 ist ein zweistufiges Planetengetriebe bekannt, bei dem die Planetenräder zwei Bereiche mit unterschiedlichen Durchmessern und Zähnezahlen aufweisen. Der eine Bereich kämmt eine Innenverzahnung eines feet stehenden Rads, der andere Bereich eine Innenverzahnung eines mit einer Ausgangswelle verbundenen Rads. Die Planetenräder sind auf einem koaxial zur Eingangs- und Ausgangswelle drehbar gelagerten Planetenträger angeordnet.

Nachteilig an diesem Getriebe ist, dass aufgrund des mehrstufigen, komplizierten Aufbaus ein separates, das Planetengetriebe umschließendes Gehäuse erforderlich ist, welches bei vorgegebenem Bauraum die Innenabmessungen und damit die Dimensionierung der einzelnen Komponenten des Planetengetriebes begrenzt. Darüber hinaus ist die Lagerung der einzelnen Komponenten aufgrund der Mehrstufigkeit sehr kompliziert und aufgrund des begrenzten zur Verfügung stehenden Innenraums nicht ausreichend für hohe volumenspezifische Leistungsdaten dimensionierbar. So sind beispielsweise sowohl die Eingangs- als auch die Ausgangswelle nur einfach gelagert, mit einer gegenseitigen Lagerverbindung dazwischen. Ein solches Getriebe erträgt nur sehr kleine Querkräfte oder Drehmomente normal zur Achsrichtung der Eingangs- und Ausgangswelle, bei deren Überschreitung schnell Versagen auftritt. Darüber hinaus können an einem solchen Getriebe keine zwei Ausgangskörper, jeweils einer in jeder Achsrichtung, angeordnet werden.

Aus US 2004/00 94 364 A1 ist ein Planetengetriebe bekannt, bei dem gegenüber vergleichbaren Planetengetrieben eine höhere volumenspezifische Leistungsdichte durch Verwendung einer verbesserten Schmierung erreicht wird. Durch die Verbesserung der Schmiermittelzu- und -abfuhr, insbesondere zu und von den Planetenrädern wird die Wärmeabfuhr verbessert so dass höhere Drehzahlen als bei herkömmlichen Planetengetrieben möglich sind, wodurch auch die volumenspezifische Leistungsdichte eines derartigen Getriebes erhöht wird. Nachteillig hieran ist jedoch, dass das maximal übertragbare Drehmoment durch die Dimensionierung der inneren Komponenten des Planetengetriebes- beschränkt ist, welche durch den zur Verfügung stehenden Innenraum begrenzt ist. Insbesondere bei Anwendungen, bei denen in einem vorgegebenem Bauraum kurzzeitig bei einer hohen Eingangsdrehzahl ein hohes Drehmoment erzeugt oder übertragen werden muss, wie etwa bei elektrisch betätigten Feststellbremsen von Kraftfahrzeugen, spielt die Erwärmung des Getriebes aufgrund der kurzzeitigen Betätigung keine Rolle. Bei solchen Anwendungen steht die maximale Dimensionierung der inneren Komponenten im Vordergrund. Dies wird durch zusätzliche Maßnahmen zur Schmiermittel zu- und abfuhr nachteilig beeinflusst.

Ist das Rad mit Außenverzahnung auf einem antreibbaren Exzenter oder einem exzentrischen Abschnitt einer Eingangswelle angeordnet, so handelt es sich um ein so genanntes Zykloidengetriebe. Zykloidengetriebe werden fälschlicherweise gelegentlich auch als Planetengetriebe bezeichnet. Das Rad mit Außenverzahnung führt bei einem Zykloidgetriebe eine überlagerte Dreh- und Exzenterbewegung aus, wobei sich die Achse des Rads mit Innenverzahnung und das Rad mit Außenverzahnung überschneiden. Mittels Zykloidgetrieben lassen sich auf kleinstem Bauraum höchste Übersetzungsverhältnisse bei maximalen spezifischen Leistungsparametern, wie etwa im vorhandenen Bauraum erzeugbares und übertragbares Drehmoment und dergleichen erreichen.

Mindestens ein Rad mit Außenverzahnung ist dabei zwischen zwei Ausgangskörpern angebracht, die gegenüber dem Rad mit Innenverzahnung drehbar gelagert sind und die miteinander verbunden sein können.

Zwischen dem Rad mit Außenverzahnung und dem Ausgangskörper befindet sich eine Einrichtung, die die überlagerte Dreh- und Exzenterbewegung des Rads mit Außenverzahnung in eine Rotationsbewegung des Ausganpskörpers umsetzt.

Aus US 5,908,372 ist ein gattungsbildendes Getriebe mit einem ringartigen Grundkörper sowie mit zwei in Bezug auf den Grundkörper drehbar gelagerten Ausgangskörpern bekannt, bei dem die Ausgangskörper in dem als Rad mit Innenverzahnung ausgeführten, ringartigen Grundkörper gelagert sind

Dabei sind die fest miteinander verbundenen Ausgangskörper mittels an der Innenseite des Rads mit Innenverzahnung angebrachten Wälzlagern drehbar gelagert. Die axialen Wälzflächen, auf denen die Wälzelemente mit ihren normal zu der Achse des Rads mit Innenverzahnung ausgerichteten Achsen rollen, sind im von dem Rad mit Innenverzahnung und den beiden Ausgangskörpern umschlossenen Innenraum untergebracht und verkleinern somit den Konstruktionsraum für den Übersetzungsmechanismus eines derartigen Getriebes.

Folglich können die im Inneren des Getriebes angeordneten Komponenten nur klein und nicht genügend robust dimensioniert werden, was wiederum die Leistungsdaten des Getriebes, z.B. das maximal erträgliche Drehmoment, begrenzt. Darüber hinaus erschwert die Anordnung der axialen Wälzflächen innen im Rad mit Innenverzahnung die Herstellung, Oberflächenvergütung sowie die Qualitätskontrolle dieser Oberflächen, letzteres insbesondere im Hinblick auf die Zugänglichkeit mit Messinstrumenten.

Zur allgemeinen Problematik der Lagerung der Ausgangskörper gegenüber dem Rad mit Innenv.erzahnung sei noch folgender Stand der Technik erwähnt:

Aus US 6,543,938 B2 ist ein Axial-Radial-Rollenlager bekannt, bei dem die Wälzkörper sowie deren Laufflächen sowohl radial, als auch axial zwischen einem äußeren, ringförmigen Lagerkörper und einer um den Umfang umlaufenden Nut eines inneren Lagerkörpers angeordnet sind. Das Axial-Radial-Rollenlager ist geeignet, sowohl Zug-, als auch Druckkräfte in axialer Richtung aufzunehmen. Hierzu ist der innere Lagerkörper zweiteilig ausgeführt, wobei sich die Druckkräfte aufnehmenden Axial Wälzkörper gegenüber einer als erste Lauffläche dienenden axialen Stirnfläche einer umlaufenden Nut an der ersten Hälfte des inneren Lagerkörpers abstützen, und sich die Zugkräfte aufnehmenden Axial-Wälzkörper gegenüber einer als zweite Lauffläche dienenden axialen Stirnfläche einer umlaufenden Nut an der zweiten Hälfte des inneren Lagerkörpers abstützen. Zwischen den Axial-Wälzkörpern für Zug- und Druckkräfte ist der äußere Lagerkörper angeordnet. Radial zwischen dem inneren und dem äußeren Lagerkörper sind die Radial-Wälzkörper angeordnet, welche sich gegenüber einer als dritte Lauffläche dienenden, umlaufenden radialen Zylinderaußenfläche am inneren Lagerkörper und einer umlaufenden radialen Zylinderinnenfläche am äußeren Lagerkörper abstützen.

Aus DE 34 25 801 A1 ist ein ähnliches Axial-Radial-Rollenlager bekannt, welches sowohl Zug- als auch Druckkräfte in axialer Richtung aufnehmen kann. Wie der äußere Lagerkörper in den Inneren Lagerkörper eingebracht werden kann, ist jedoch nicht näher dargestellt.

Aus DE 101 30 458 A1 ist ein ähnliches Axial-Radial-Rollenlager bekannt, welches sowohl Zug- als auch Druckkräfte in axialer Richtung aufnehmen kann. Der Innere Lagerkörper ist dabei als Hülse mit einem einseitig angeordneten Flansch ausgeführt. Auf die Hülse ist eine erste Laufscheibe aufgesetzt, welche sich gegenüber dem Flansch abstützt und die Lauffläche für die Druckkräfte aufnehmenden Axial-Wälzkörper bildet. Eine zweite Laufscheibe bildet die Lauffläche für die Zugkräfte aufnehmenden Axial-Wälzkörper. Die zweite Laufscheibe ist mittels eines selbstsichernden, unlösbaren Klemmrings auf der Hülse angeordnet und gegenüber den Axial-Wälzkörpern vorgespannt.

Aus DE 585 316 ist ein Axial-Radial-Rollenlager bekannt, bei dem die Lauffläche der Axial-Wälzkörper als umlaufende axiale Stirnfläche eines kreisringförmigen ersten Lagerkörpers ausgebildet ist. Ein zweiter, Druckkräfte in axialer Richtung aufnehmender Lagerkörper weist ebenfalls eine axiale Stirnseite als Lauffläche auf und stützt sich mit dieser auf die Axial-Wälzkörper. Der zweite Lagerkörper weist eine radiale Zylinderinnenfläche auf, welche als erste Lauffläche für die Radial-Wälzkörper dient. Ein dritter Lagerkörper schließlich weist eine radialen Zylinderaußenfläche auf, welche als zweite Lauffläche für die Radial-Wälzkörper dient.

Aus DE 199 24 018 A1 ist ein Axialrollenlager mit einem mehrteiligen Lagerkäfig bekannt, dessen Lagerkäfig auch die Laufflächen der Wälzkörper umfasst. Dadurch kann auf eine aufwändige Bearbeitung von Lagerlaufflächen verzichtet werden. Um durch Gleiten der Wälzkörper auf den Laufflächen verursachte Reibungsverluste zu eliminieren, sind die als Laufflächen dienenden Teile des Lagerkäfigs konvex ausgebildet, wobei die konvexen Bereiche mit zunehmender Belastung elastisch verformbar sind.

Bei allen Lagern mit integrierten Laufflächen für die Wälzkörper ist vorteilhaft, dass die Bearbeitung der Laufflächen nicht mehr am zu lagernden Bauteil, wie etwa beim oben beschriebenen Zykloidengetriebe am Rad mit Innenverzahnung oder an den Ausgangskörpern zu erfolgen hat. Nachteilig ist hierbei jedoch der höhere Bauraumbedarf gegenüber einer Ausführung, bei der die Wälzkörper auf direkt an den Bauteilen angeordneten Laufbahnen abrollen, was die Verwendung derartiger Lager in Verbindung mit Zykloidengetrieben mit sehr hohen volumenspezifischen Leistungsdaten nicht erlaubt.

Ausgehend vom obigen Stand der Technik liegt der Erfindung die Aufgabe zugrunde, hier Abhilfe zu schaffen.

Diese Aufgabe wird erfindungsgemäß durch Merkmale des Anspruchs 1 gelöst

Eine der wesentlichen Vorteile der Erfindung besteht darin, dass die axiale Stirnseite die Oberfläche der Lauffläche insbesondere während der Herstellung, der Oberflächenvergütung sowie der Qualitätskontrolle sehr gut zugänglich ist. Hierdurch kann die Bearbeitbarkeit der Laufflächen bei deren Herstellung im Vergleich zum Stand der Technik deutlich vereinfacht werden. Insbesondere ist es durch die erfindungsgemäße Anordnung der Lauffläche möglich, die Laufflächen mehrerer ringförmiger Grundkörper gleichzeitig zu bearbeiten. Ein weiterer Vorteil der erfindungsgemäßen Anordnung der Lauffläche ist, dass der Innenraum der insbesondere als Zykloidengetriebe ausgeführten Vorrichtung bei gleichen Außenabmessungen maximal wird. Hierdurch können die im Inneren des Zykloidengetriebes angeordneten Komponenten größer und robuster dimensioniert werden. Dies verbessert die Leistungsdaten des Getriebes, z.B. das maximal erträgliche Drehmoment, die maximale Leistung, die Torsionssteifigkeit usw. und damit die volumen- und gewichtspezifischen Leistungsdaten eines derartigen Zykloidengetriebes gegenüber dem Stand der Technik.

Ein Vorteil der Anordnung der als Laufflächen dienenden axialen Kreisringflächen des Grundkörpers an dessen Außen-Stirnseiten besteht darin, dass diese Anordnung den Innenraum in radialer Richtung bei unveränderten Außenabmessungen vergrößert. Der größere Innenraum macht eine robustere Konstruktion der in dem Innenraum angeordneten Getriebekomponenten möglich, wodurch die Funktionsparameter des Getriebes, wie z.B. die Momentkapazität, Leistungsdichte, Torsionssteifigkeit gegenüber dem Stand der Technik verbessert sind und höhere Werte erreichen.

Darüber hinaus ist der Durchmesser des Teilkreises der an den Außen-Axialflächen angeordneten Wälzelemente im Vergleich zur Anordnung von Wälzelementen an der axialen Innenfläche ebenfalls größer. Infolge dessen steigt bei gleichen Außenabmessungen des Getriebes der Wert der Kippsteifigkeit und der Momentkapazität gegenüber dem Stand der Technik enorm an.

Ein weiterer Vorteil der erfindungsgemäßen drehbaren Lagerung der Ausgangskörper besteht darin, dass der Unterschied zwischen der Umfangsgeschwindigkeit des Lagerkäfigs und den Wälzelementen auf den Wälzflächen des Ausgangskörpers minimal ist, was im Hinblick auf Reibung und Abrieb des Lagerkäfigs von Vorteil ist.

Die Anordnung der Wälzlaufbahnen an den Stirnseiten des Rads mit Innenverzahnung weist einige bedeutende technische Vorteile auf:
1. Das Schleifen der an den Stirnseiten des Rads mit Innenverzahnung angeordneten Laufbahnen kann auf hochproduktiven, bei der Lagerherstellung verwendeten Schleifmaschinen vorgenommen werden, was die Herstellungskosten stark verringert.
2. Die an den Stirnseiten des Rads mit Innenverzahnung angeordneten Laufbahnen dienen gleichfalls als Spannflächen für das Schleifen der Innenverzahnung, somit entfällt die Notwendigkeit einer zusätzlichen technologischen Spannfläche, was ebenfalls Einsparungen der Herstellungskosten bedeutet.
3. Die Messung des Abstands der an den Stirnseiten des Rads mit Innenverzahnung angebrachten Laufbahnen zwecks Einstellung einer günstigen A-xialvorspannung der Wälzlagerung der Ausgangskörper wird ebenfalls vereinfacht.

Eine vorteilhafte Ausgestaltung der Erfindung sieht vor, dass die der einen Lauffläche zugewande andere Lauffläche an der Stirnseite des Ausgangskörpers ausgebildet ist.

Im Raum zwischen den einander gegenüberliegenden Axialflächen-des-Ausgangskörpers und des Grundkörpers sind vorzugsweise zylinderförmige Wälzelemente angeordnet, deren Achsen normal zur Achse des Grundkörpers ausgerichtet sind. Die Axialfläche des Ausgangskörpers und die Axialfläche des Grundkörpers können entsprechend gewölbt sein, um Kantenspannungen an den Enden der Wälzelemente, - die sich zwischen diesen Flächen befinden, zu beseitigen.

Eine vorteilhafte Ausgestaltung der Erfindung sieht vor, dass der Ringkanal radialseitig nach außen hin offen ist.

Eine andere vorteilhafte Ausgestaltung der Erfindung sieht vor, dass die Lauffläche eine axiale Ringfläche einer im Ausgangskörper eingelassen Stufe bildet, während eine parallel zur Achse der Vorrichtung verlaufende, radiale Ringfläche die andere Fläche der Stufe bildet.

Erfindungsgemäß ist dabei an jedem an dem Grundkörper anordbaren Ausgangskörper eine radiale Außen-Wälzfläche und gleichzeitig mindestens an einem Ausgangskörper an dessen Außenseite eine axiale Kreisringfläche ausgebildet.

Eine andere vorteilhafte Ausgestaltung der Erfindung sieht vor, dass die Lauffläche die Stirnseite eines axial ausgerichteten Ringvorsprunges des Grundkörpers bildet.

Eine zusätzliche vorteilhafte Ausgestaltung der Erfindung sieht vor, dass der Ringvorsprung einen rechteckförmigen Querschnitt aufweist, dessen radiale Innenseite eine radiale Lauffläche bildet.

Der beispielsweise als Rad mit Innenverzahnung ausgeführte Grundkörper ist dadurch an den an die Ausgangskörper anliegenden Seiten mit radialen Innen-Wälzflächen versehen, und gleichzeitig ist mindestens an einer Außen-Stirnseite eine normal zur Längsachse des Grundkörpers orientierte axiale Kreisringfläche gebildet. Der senkrechte Abstand der axialen Kreisringflächen am Rad mit Innenverzahnung zueinander bestimmt dessen Dicke.

Eine besonders vorteilhafte Ausgestaltung der Erfindung sieht vor, dass die am Grundkörper angeordnete radiale Lauffläche und die am Ausgangskörper angeordnete Ringfläche einander zugekehrt sind und einen durch die Laufflächen für Wälzkörper beschränkten Ringkanal bilden.

Dabei befinden sich zwischen der Radialfläche des Ausgangskörpers und der Radialfläche des Rads mit Innenverzahnung vorzugsweise zylinderförmige Wälzelemente, deren Achsen mit der Achse des Rads mit Innenverzahnung parallel verlaufen und die beim Rollen von der Stirnfläche des Lagerkäfigs geleitet werden.

Eine andere, besonders vorteilhafte Ausgestaltung der Erfindung sieht vor, dass die Achsen der in dem von der am Grundkörper angeordneten radialen Lauffläche und der am Ausgangskörper angeordneten radialen Ringfläche gebildeten Laufkanal angeordneten und vorzugsweise zylinderähnlichen Wälzkörper parallel zur Längsachse der Vorrichtung verlaufen.

Eine vorteilhafte Ausgestaltung der Erfindung sieht vor, dass auf den einander zugewandten, normal zu der Achse orientierten Laufflächen des Grundkörpers und des Ausgangskörpers Lagerlaufbahnen ausgebildet sind. An dem anliegenden Axialflächenpaar des Ausgangskörpers und dem Rad mit Innenverzahnung können Lagerlaufbahnen zur Lagerung der kugelförmigen bzw. tonnenartigen Wälzelemente gebildet sein.

Eine vorteilhafte Ausgestaltung der Erfindung sieht vor, dass die einander zugewandten, parallel zu der Achse verlaufenden Laufflächen des Grundkörpers und des Ausgangskörpers gewölbt ausgebildet sind. Die Radialfläche des Ausgangskörpers und die Radialflächen des Rads mit Innenverzahnung können zwecks Beseitigung der Kantenspannung an den Enden der Wälzelemente, die sich zwischen diesen Flächen befinden, entsprechend gewölbt sein.

Ein Ausführungsbeispiel der Erfindung ist in Zeichnungen schematisch dargestellt und wird im Folgenden näher erläutert. Es zeigen:
- Fig. 1: eine Darstellung einer erfindungsgemäßen Lagerung zweier Ausgangs- körper in einem Rad mit Innenverzahnung im Längsschnitt, einmal im zusammengebauten Zustand und einmal in einer Explosionsansicht,
- Fig. 2: eine perspektivische Explosionsansicht der erfindungsgemäßen Anord- nung der einzelnen Lagerungskomponenten der Ausgangskörper im Rad mit Innenverzahnung,
- Fig. 3: eine Detailansicht eines Lagerkäfigs sowie der Anordnung der Wälz- körper in dem Lagerkäfig, sowie
- Fig. 4: eine perspektivische Explosionsdarstellung der einzelnen Komponen- ten eines Zykloidengetriebes in deren Funktionslagen, dessen Aus- gangskörper mittels einer erfindungsgemäßen Anordnung von Lager- laufbahnen und Wälzkörpern gegenüber einem als Rad mit Innenver- zahnung ausgeführten Grundkörper drehbar gelagert ist.

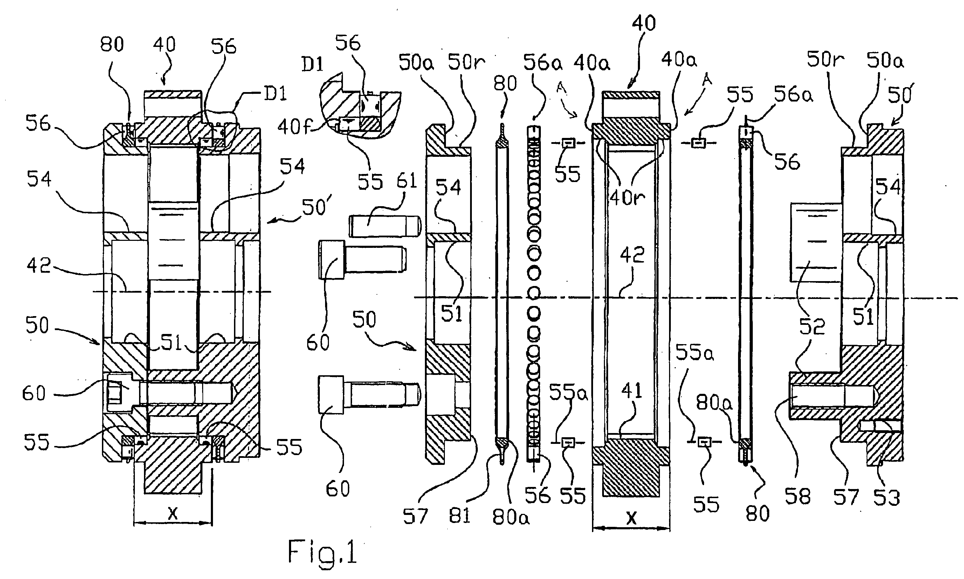

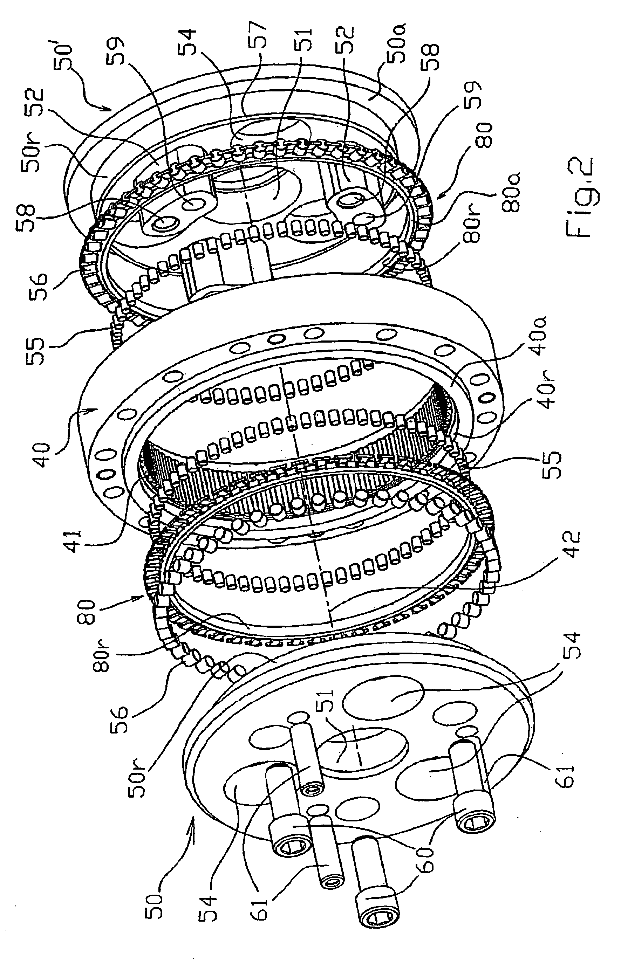

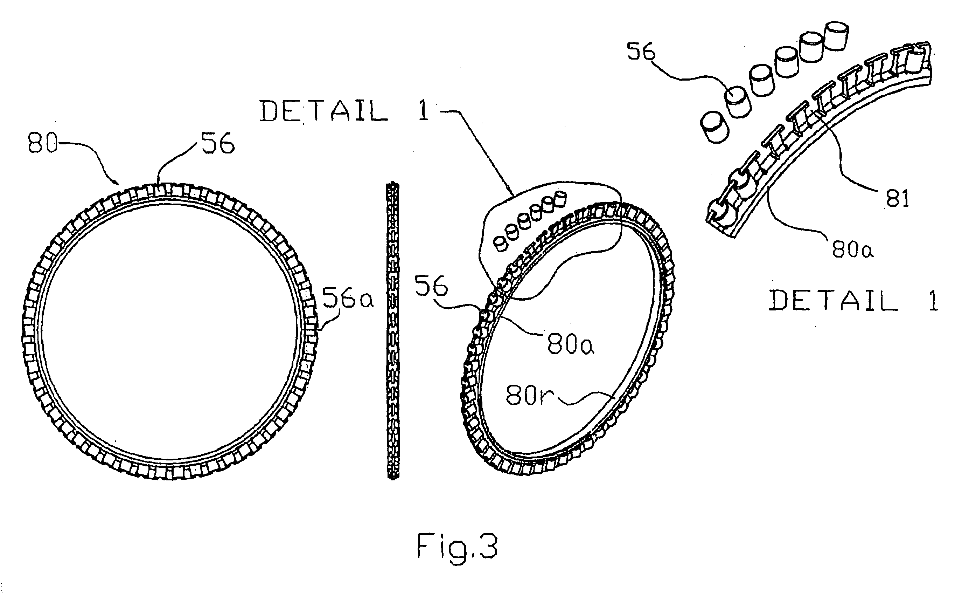

Eine vorteilhafte Lösung der Lagerung der Ausgangskörper im Rad mit Innenverzahnung eines Getriebes ist in den Fig. 1 und 2, sowie in Fig. 3 dargestellt.

Das Rad 40 mit Innenverzahnung 41 ist auf zwei fest miteinander verbundenen Ausgangskörpern 50, 50' gelagert (Fig. 1).

Jeder der Ausgangskörper 50, 50' weist eine im Wesentlichen zylinderförmige radiale Außenfläche auf. In diese radiale Außenfläche ist eine umlaufende Stufe eingelassen. Diese Stufe wird von einer der axialen Stirnseite A des Grundkörpers 40 zugewandten Zwischenringfläche 50a und einer radialen Außenfläche 50r gebildet. Die Zwischenringfläche 50a und die radiale Außenfläche 50r jedes der Ausgangskörper 50, 50' dienen dabei als Laufflächen für zwischen dem jeweiligen Ausgangskörper 50, 50' und dem Rad 40 mit Innenverzahnung angeordnete Wälzkörper 55, 56.

Das Rad 40 weist hierbei ebenfalls Laufflächen auf. Das Rad 40 ist zum einen an seinen an die Ausgangskörper 50, 50' anliegenden Seiten mit zylinderförmigen radialen Innenflächen 40r versehen. Gleichzeitig sind an dessen Außen-Stirnflächen axiale Kreisringflächen 40a gebildet, welche normal zur Längsachse 42 des Rads 40 orientiert sind. Der senkrechte Abstand zwischen den axialen Kreisringflächen 40a bestimmt die Dicke X des Rads 40.

Dabei liegen die axialen Kreisringflächen 40a des Rads 40 jeweils einer Zwischenringfläche 50a eines der beiden Ausgangskörper 50, 50' stirnseitig gegenüber. Ebenso liegen die radialen Innenflächen 40r des Rads jeweils einer radialen Außenfläche 50r eines der beiden Ausgangskörper 50, 50' radial beabstandet gegenüber. Die radialen 40r*,* 50r und die axialen 40a, 50a Flächen bilden dabei einen Ringkanal, in dem Wälzkörper zur axialen Abstützung und Wälzkörper zur radialen Führung anordbar sind.

An beiden Außen-Stirnseiten zwischen den anliegenden Axialflächen 40a und 50a des Rads 40 und den Ausgangskörpern 50, 50' sind zylinderförmige Wälzelemente 56 angeordnet, deren Achsen 56a senkrecht zur Achse 42 des Rads 40 angerichtet sind. Die Axialfläche des Ausgangskörpers 50, 50' und die Axialfläche des Rads 40 mit Innenverzahnung können dabei entsprechend gewölbt sein, um Kantenspannungen an den Enden der Wälzelemente, die sich zwischen diesen Flächen befinden, zu beseitigen.

Die Wälzelemente 56 sind in Aussparungen 81 des Lagerkäfigs 80 gelagert, der mit zwei Stirnflächen 80a und einer Innenfläche 80r versehen ist, mit der er auf der zylinderförmigen Außenfläche des Ausgangskörpers drehbar lagert (Fig. 1, Fig. 3). Die Aussparungen 81 des Lagerkäfigs 80 sind so ausgeführt, dass ein radiales Herausfallen der Wälzelemente 56 aus dem Lagerkäfig 80 verhindert wird.

Zwischen den radialen Außenflächen 50r der Ausgangskörper 50, 50' und den radialen Innenflächen 40r des Rads 40 befinden sich zylinderförmige Wälzelemente 55, deren Achse 55a parallel zur Achse 42 des Rads 40 verläuft. Die Wälzelemente 55 werden beim Rollen auf den radialen Flächen 50r und 40r von einer der Stirnflächen 80a des Lagerkäfigs 80 und der im Rad 40 gebildeten Führungsfläche 40f geführt.

Mindestens einer der Ausgangskörper 50, 50' ist an der Außen-Stirnfläche mit Gewindeöffnungen 53 für die Befestigung des Getriebes am angetriebenen Objekt oder am Rahmen der Einrichtung, in der das Getriebe installiert ist, versehen.

Die Ausgangskörper 50, 50' sind mittels Querelementen 52, die einen integralen Bestandteil des Ausgangselements 50' bilden, miteinander verbunden. An deren Stirnseite ist eine Gewindebohrung 58 für eine Schraube 60 sowie eine Bohrung für einen Stift 61 vorgesehen, die die Ausgangskörper 50, 50' unverdrehbar miteinander verbinden. Die Ausgangskörper 50, 50' weisen darüber hinaus Stütz-Stirmflächen 57 auf, zwischen denen das Rad 40 mit Innenverzahnung bei dessen Planetenbewegung axial geführt wird.

An den Ausgangskörpern 50, 50' sind Zentralöffnungen 51 ausgebildet, wobei zwischen Zentralöffnung 51 und der Radialfläche 50r außermittige Öffnungen 54 angeordnet sind.

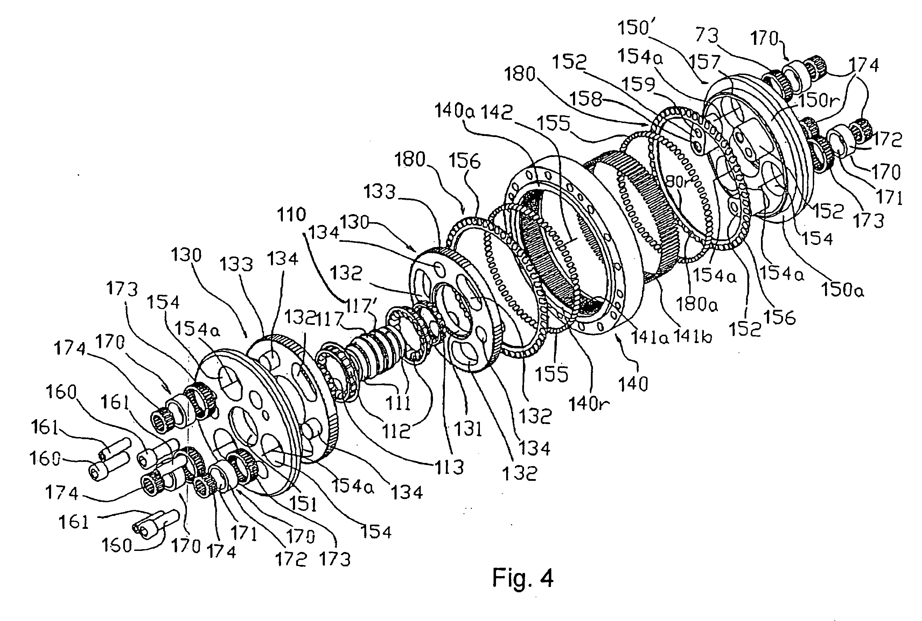

Fig. 4 zeigt eine Ausgestaltung der erfindungsgemäßen Vorrichtung in Form eines Zykloidengetriebes, dessen Ausgangskörper mittels einer erfindungsgemäßen Anordnung von Lagerlaufbahnen und Wälzkörpern gegenüber einem als Rad mit Innenverzahnung ausgeführten Grundkörper drehbar gelagert ist.

Eine Eingangswelle 110 ist mit exzentrischen Abschnitten 117, 117' - den Exzentern - versehen, die um die Achse der Eingangswelle um 180o gegeneinander versetzt sind. Die Achsen der exzentrischen Abschnitte 117, 117' sind entgegen der Achse der Eingangswelle um einen Abstand e - der Exzentrizität - versetzt. Vorzugsweise ist die Eingangswelle 110 an ihrer Innenöffnung mit einer Innennutung für den Anschluss eines Antriebsmotors versehen.

Auf den exzentrischen Abschnitten 117, 117', deren Umfang Laufbahnen für die Wälzelemente 112 bildet, sind durch die zentralen Öffnungen 131 Räder 130 mit Außenverzahnung 133 drehbar gelagert. Die Wälzkörper sind in einem Lagerkäfig gelagert. Die Räder 130 mit Außenverzahnung 133 greifen in die Innenverzahnung 141 des Rads 40 ein.

Die Zahnanzahl der Außenverzahnung 133 des Rads 130 ist geringer als die der Innenverzahnung 141 des Rads 140. Die Achse der Räder 130 ist entgegen der Achse des Rads 140 um den Abstand e versetzt. Die Innenverzahnung 141 besteht aus Nuten 141 a mit einem Halbkreisprofil, in denen Zylinderzapfen 141 b gelagert sind.

Die Räder 130 mit Außenverzahnung sind am Außenumfang im gleichen Abstand voneinander mit außermittigen, durchgehenden Axialöffnungen 132 versehen. Die Räder 130 sind zwischen zwei Auggangskörpern 150, 150' angebracht, wobei die Ausgangskörper 150, 150' mittels Querelementen 152, die die Axialöffnungen 132 der Räder 130 mit einem Spiel so durchqueren, dass die Ausgangskörper 150, 150' ein gegenseitig bewegungsloses Paar bilden, verbunden sind.

Die Querelemente 152 stellen einen integralen Bestandteil der Ausgangskörper 150, 150' dar. An deren Stirnseite ist jeweils eine Gewindebohrung 158 zur Aufnahme einer Schraube 160 sowie jeweils eine Bohrung 159 zur Aufnahme eines Stifts 161 ausgeführt, die die Ausgangskörper 150, 150' fest miteinander verbinden. Das Querelement 152 kann als selbständige, mindestens mit einem Ausgangskörper 150, 150' fest verbundene Komponente gebildet sein.

Das fest verbundene Ausgangskörperpaar 150, 150' ist im Rad 140 drehbar gelagert.

Jeder der Ausgangskörper 150, 150' ist mit einer zentralen Öffnung 151 mit einer äußeren zylindrischen, radialen Außenfläche 150r versehen. In den zentralen Öffnungen 151 der Ausgangskörper 150, 150' ist mit Hilfe der Wälzelemente 113 und Lagerbahnen 111 an den Enden der Eingangswelle 110 die Eingangswelle 110 drehbar gelagert. Die Wälzelemente 113 sind in einem Lagerkäfig gelagert.

Im Raum zwischen der zentralen Öffnung 151 und der radialen Außenfläche 150r der Ausgangskörper 150, 150' befinden sich in gleichen Abständen voneinander am Außenumfang angebrachte außermittige Öffnungen 154 der Ausgangskörper 150, 150'.

Die Ausgangskörper 150, 150' sind an der Außenseite mit außermittigen Axialflächen 150a versehen, und zwar an der an das Rad 140 anliegenden Seite.

Das Rad 140 ist an den an die Ausgangskörper 150, 150' anliegenden Seiten mit zylindrischen radialen Innenflächen 140r und gleichzeitig an den Außen-Stirnseiten mit kreisringförmigen Axialflächen 140a versehen, zu denen die Achse des Rads 140 mit Innenverzahnung 141 quer ausgerichtet ist. Der Querabstand der Axialflächen 140a am Rad 140 mit Innenverzahnung 141 bestimmt dessen Ausdehnung in Richtung der Längsachse der Eingangswelle 110.

An beiden Seiten zwischen den Axialflächen 140a und 150a des Rads 140 und des Ausgangskörpers 150, 150' befinden sich Wälzelemente 156 zylindrischer Form, deren Achse quer zur Achse 142 des Rads 140 ausgerichtet ist. Die Wälzelemente 156 sind in Aussparungen eines Lagerkäfigs 180 gelagert, der zwei Stirnflächen 180a und eine Innenfläche 180r aufweist, mit der er auf der zylindrischen Außenfläche 150r des jeweiligen Ausgangskörpers 150, 150' lagert.

Zwischen den radialen Außenflächen 150r der Ausgangskörper 150, 150' mit radialen Innenflächen 140r des Rads 140 befinden sich zylinderförmige Wälzelemente 155, deren Achse in Richtung der Achse 142 des Rads 140 mit Innenverzahnung 141 orientiert ist. Die Wälzelemente 155 werden beim Wälzen über die Außenflächen 150r und 140r von einer der Stirnflächen 180a des Lagerkäfigs 180 und der am Rad 140 gebildeten Führungsfläche geführt.

Zwischen jedem der Räder 130 mit Außenverzahnung 133 und dem anliegenden Ausgangskörper 150, 150' ist eine Einrichtung angeordnet, die die Planetenbewegung des Rads 130 mit Außenverzahnung 133 in eine Rotationsbewegung des Ausgangskörpers 150, 150' umsetzt. Diese Einrichtung besteht aus drei zylinderförmigen Körpern 134, der Form nach zylindrischen Zapfen, die auf der Stirnfläche des an den Ausgangskörper 150, 150' anliegenden Rads 130 gleichmäßig über dessen Umfang verteilt angeordnet sind. Die zylinderförmigen Körper 134 sind in Richtung der Achse 142 des Rads 140 mit Innenverzahnung 141 orientiert und mit dem Rad 130 mit Außenverzahnung 133 fest verbunden. Die zylinderförmigen Körper 134 sind in den Organen 170 drehbar gelagert, die ihrerseits in den außermittigen Öffnungen 154 der Ausgangskörper 150, 150' drehbar gelagert sind. Das Organ 170 ist in Form eines Rings mit einer zylindrischen Innen- 171 und einer zylindrischen Außenfläche 172 ausgeführt, wobei die Achse der zylindrischen Innenfläche 171 entgegen der Achse der zylindrischen Außenfläche 172 um einen Abstand e versetzt ist. Eine derartige Form wird auch als Excenterring bezeichnet. Der Abstand der Achse des zylinderförmigen Körpers 134 von der Achse 154a der außermittigen Öffnung 154 des Ausgangskörpers 150, 150' beträgt ebenfalls e.

Die drehbare Lagerung des Organs 170 in der außermittigen Öffnung 154 des Ausgangskörpers 150, 150' ist als Wälzlagerung mit in einem Lagerkäfig gelagerten Wälzelementen 173 ausgeführt. Die Drehlagerung des zylindrischen Körpers 134 im Organ 170 ist ebenso als eine Wälzlagerung ausgeführt. Hierfür sind die in einem Lagerkäfig gelagerten Wälzelemente 174 vorgesehen. An den an die Räder 130 mit Außenverzahnung 133 anliegenden Stirnseiten der Ausgangskörper 150, 150' sind Stützflächen 157 ausgebildet, zwischen denen die Räder 130 bei deren sich aus einer überlagerten Dreh- und Excenterbewegung zusammensetzende Planetenbewegung axial geführt werden. Die Stützflächen 157 verhindern gleichzeitig eine axiale Verschiebung der Zylinderzapfen 141 b der Innenverzahnung 141.

Mindestens an einem der Ausgangskörper 150, 150' sind an der Außen-Stirnfläche Gewindebohrungen zur Befestigung des Getriebes am anzutreibenden Objekt oder am Rahmen der Einrichtung, in der das Getriebe installiert ist, ausgeführt.

## Patentansprüche

1. Vorrichtung, insbesondere Zykloidengetriebe, mit einem ringartigen Rundkörper (40, 140), mit mindestens einem mit Bezug auf den Grundkörper drehbar gelagerten Ausgangskörper (50, 150, 150') sowie mit mindestens einem zwischen den beiden Körpern (40, 50, 140, 150, 150') ausgebildeten Ringkanal mit Laufflächen (40a, 50a, 140a, 150a) für Walzkörper (56, 156) zur Aufnahme von Axialkräften zwischen dem Grundkörper (40, 140) und dem Ausgangskörper (50, 150, 150'),
**dadurch gekennzeichnet,**
**dass** eine den Ringkanal begrenzende Lauffläche (40a, 140a) an der axialen Stirnseite (A) des Grundkörpers (40, 140) ausgebildet ist, durch welche die maximale Dicke (X) des Grundkörpers (40, 140) in axialer Richtung definiert ist.

2. Vorrichtung nach Anspruch 1,
**dadurch gekennzeichnet,**
**dass** die der einen Lauffläche (40a, 140a) zugewande, andere den Ringkanal begrenzende Lauffläche (50a, 150a) an der Stirnseite des Ausgangskörpers (50, 150, 150') ausgebildet ist.

3. Vorrichtung nach Anspruch 1 oder 2,
**dadurch gekennzeichnet,**
**dass** der Ringkanal radialseitig nach außen offen ist.

4. Vorrichtung nach einem der Ansprüche 1 bis 3,
**dadurch gekennzeichnet,**
**dass** die Lauffläche (50a, 150a) eine Ringfläche einer im Ausgangskörper (50, 150, 150') eingelassen Stufe bildet, während eine parallel zur Achse (42, 142) der Vorrichtung verlaufende Ringfläche (50r) die andere Fläche der Stufe bildet.

5. Vorrichtung nach einem der Ansprüche 1 bis 4,
**dadurch gekennzeichnet,**
**dass** die Lauffläche (50a, 150a) die Stirnseite eines axial ausgerichteten Ringvorsprunges des Grundkörpers (40, 140) bildet.

6. Vorrichtung nach einem der Ansprüche 1 bis 5,
**dadurch gekennzeichnet,**
**dass** der Ringvorsprung einen rechteckförmigen Querschnitt aufweist, dessen radiale Innenseite eine radiale Lauffläche (40r) bildet.

7. Vorrichtung nach einem der Ansprüche 1 bis 6,
**dadurch gekennzeichnet,**
**dass** die Lauffläche (40r) und die Ringfläche (50r) einander zugekehrt sind und einen Ringkanal für Wälzkörper (55, 155) bilden.

8. Vorrichtung nach Anspruch 7,
**dadurch gekennzeichnet,**
**dass** die Achsen (55a) der zylinderähnlichen Wälzkörper (55, 155) parallel zur Achse (42, 142) verlaufen.

9. Vorrichtung nach einem der Ansprüche 1 bis 8,
**dadurch gekennzeichnet,**
**dass** auf den einander zugewandten, normal zu der Achse (42, 142) orientierten Laüfflächen (40a, 50a, 140a, 150a) des Grundkörpers (40, 140) und des Ausgangskörpers (50, 150, 150') Lagerlaufbahnen ausgebildet sind.

10. Vorrichtung nach einem der Ansprüche 1 bis 9,
**dadurch gekennzeichnet,**
**dass** die einander zugewandten, parallel zu der Achse (42, 142) verlaufenden Laufflächen (40a, 50a, 140a, 150a) des Grundkörpers (40, 140) und des Ausgangskörpers (50, 150, 150') gewölbt ausgebildet sind.

11. Vorrichtung nach einem der vorhergehenden Ansprüche,
**dadurch gekennzeichnet,**
**dass** der mindestens eine Ausgangskörper sowie der Grundkörper Bestandteile eines Zykloidengetriebes sind, welches mindestens ein Rad (140) mit Innenverzahnung (141), mindestens einen in Bezug auf das Rad (140) drehbar gelagerten Ausgangskörper (150, 150') sowie eine Eingangswelle (110) mit mindestens einem exzentrischen Abschnitt (117, 117') mit einer Exzentrizität (e), auf dem ein mit der Innenverzahnung kämmendes Rad (130) mit Außenverzahnung (133) drehbar gelagert ist aufweist, wobei bei zwei Ausgangskörpern (150, 150') mindestens ein Rad (130) zwischen den Ausgangskörpern (150, 150') angeordnet ist, sowie eine zwischen dem Rad (130) und dem Ausgangskörper (150, 150') angeordnete Einrichtung, welche die Planetenbewegung des Rades (130) in eine Rotationsbewegung des Ausgangskörpers transformiert umfasst, wobei die Einrichtung mindestens einen zylindrischen, sich in Achsrichtung des Rades (130) erstreckenden Körper (134) aufweist, der in einem Organ (170) drehbar gelagert ist, und wobei der Körper (34) mit dem Rad (30) betriebsgemäß verbunden ist, das Organ (170) in einer Öffnung (154) des Ausgangskörpers (150, 150') drehbar gelagert ist, und die Achse des Körpers (34) von der Achse (154a) der Öffnung (154) um einen der Exzentrizität (e) entsprechenden Abstand beabstandet ist.

## Claims

1. Device, more especially cycloid gear, having a ring-like base body (40, 140), at least one output body (50, 150, 150') that is rotatably mounted with reference to the base body and at least one annular channel, realized between the two bodies (40, 50, 140, 150, 150'), with running surfaces (40a, 50a, 140a, 150a) for rolling bodies (56, 156) for accommodating axial forces between the base body (40, 140) and the output body (50, 150, 150'), **characterised in that** a running surface (40a, 140a), defining the annular channel, is realized on the axial end face (A) of the base body (40, 140), via which the maximum thickness (X) of the base body (40, 140) is defined in the axial direction.

2. Device according to claim 1, **characterised in that** the other running surface (50a, 150a) facing the one running surface (40a, 140a) and defining the annular channel is realized at the end face of the output body (50, 150, 150').

3. Device according to claim 1 or 2, **characterised in that** the annular channel is open to the outside on the radial side.

4. Device according to one of claims 1 to 3, **characterised in that** the running surfaces (50a, 150a) form an annular face of a step that is admitted in the output body (50, 150, 150'), whilst an annular face (50r) extending parallel to the axis (42, 142) of the device forms the other face of the step.

5. Device according to one of claims 1 to 4, **characterised in that** the running surface (50a, 150a) forms the end face of an axially orientated annular projection of the base body (40, 140).

6. Device according to one of claims 1 to 5, **characterised in that** the annular projection has a rectangular cross-section, the radial inner side of which forms a radial running surface (40r).

7. Device according to one of claims 1 to 6, **characterised in that** the running surface (40r) and the annular face (50r) face one another and form an annular channel for rolling bodies (55, 155).

8. Device according to claim 7, **characterised in that** the axes (55a) of the cylinder-like rolling bodies (55, 155) extend parallel to the axis (42, 142).

9. Device according to one of claims 1 to 8, **characterised in that** bearing races are realized on the running surfaces (40a, 50a, 140a, 150a) of the base body (40, 140) and of the output body (50, 150, 150'), the said running surfaces facing each other and being orientated normally to the axis (42, 142).

10. Device according to one of claims 1 to 9, **characterised in that** the running surfaces (40a, 50a, 140a, 150a) of the base body (40, 140) and of the output body (50, 150, 150'), facing each other and extending parallel to the axis (42, 142), are cambered.

11. Device according to one of the preceding claims, **characterised in that** the at least one output body and the base body are components of a cycloid gear, which includes at least one wheel (140) with internal toothing (141), at least one output body (150, 150') that is rotatably mounted with respect to the wheel (140) and an input shaft (110) with at least one eccentric portion (117, 117') with an eccentricity (e), on which a wheel (130) with external toothing (133) meshing with the internal toothing is rotatably mounted, wherein with two output bodies (150, 150') at least one wheel (130) is disposed between the output bodies (150, 150'), and a device, which transforms the planetary motion of the wheel (130) into a rotational movement of the output body, disposed between the wheel (130) and the output body (150, 150'), wherein the device has at least one cylindrical body (134) that extends in the axial direction of the wheel (130) and is rotatably mounted in an element (170), and wherein the body (34) is operatively connected to the wheel (30), the element (170) is rotatably mounted in an opening (154) of the output body (150, 150'), and the spacing between the axis of the body (34) and the axis (154a) of the opening (154) corresponds to the eccentricity (e).

## Revendications

1. Dispositif notamment engrenage cycloïdal, comprenant un corps (40, 140) de base en anneau, au moins un corps (50, 150, 150') de sortie monté tournant par rapport au corps de base, ainsi qu'au moins un canal annulaire formé entre les deux corps (40, 50, 140, 150, 150') et ayant des surfaces (40a, 50a, 140a, 150a) de roulement pour des corps (56, 156) en rouleau pour absorber des forces axiales entre le corps (40, 140) et le corps (50, 150, 150') de sortie,
**caractérisé**
**en ce qu'**une surface (40a, 140a) de roulement délimitant le canal annulaire est formée sur le côté (A) frontal axial du corps (40, 140) de base, surface par laquelle l'épaisseur (X) maximum du corps (40, 140) de base est définie dans la direction axiale.

2. Dispositif suivant la revendication 1,
**caractérisé en ce que** l'autre surface (50a, 150a) de roulement, délimitant le canal annulaire et tournée vers l'une des surfaces (40a, 140a) de roulement, est formée sur le côté frontal du corps (50, 150, 150') de sortie.

3. Dispositif suivant la revendication 1 ou 2,
**caractérisé en ce que** le canal annulaire est ouvert vers l'extérieur du côté radial.

4. Dispositif suivant la revendication 1 à 3,
**caractérisé en ce que** la surface (50a, 150a) de roulement forme une surface annulaire d'un gradin encastré dans le corps (50, 150, 150') de sortie, tandis qu'une surface (50r) annulaire s'étendant parallèlement à l'axe (42, 142) du dispositif forme l'autre surface du gradin.

5. Dispositif suivant l'une des revendications 1 à 4,
**caractérisé en ce que** la surface (50a, 150a) de roulement forme le côté frontal d'une saillie annulaire dirigée axialement du corps (40, 140) de base.

6. Dispositif suivant l'une des revendications 1 à 5, **caractérisé en ce que** la saillie annulaire a une section transversale rectangulaire dont le côté intérieur radial forme une surface (40r) de roulement radial.

7. Dispositif suivant l'une des revendications 1 à 6, **caractérisé en ce que** la surface (40r) de roulement et la surface (50r) annulaire sont tournées l'une vers l'autre et forment un canal annulaire pour les corps (55, 155) en rouleau.

8. Dispositif suivant la revendication 7, **caractérisé en ce que** les axes (55a) des corps (55, 155) en rouleau analogues à des cylindres s'étendent parallèlement à l'axe (42, 142).

9. Dispositif suivant l'une des revendications 1 à 8, **caractérisé en ce que** sur les surfaces (40a, 50a, 140a, 150a) de roulement du corps (40, 140) de base et du corps (50, 150, 150') de sortie, tournées l'une vers l'autre et orientées normalement à l'axe (42, 142), sont formées des portées de palier.

10. Dispositif suivant l'une des revendications 1 à 9, **caractérisé en ce que** les surfaces de roulement (40a, 50a, 140a, 150a) du corps (40, 140) de base et du corps (50, 150, 150') de sortie, tournées l'une vers l'autre mais s'étendant parallèlement à l'axe (42, 142), sont courbées.

11. Dispositif suivant l'une des revendications précédentes, **caractérisé**
**en ce que** le au moins un corps de sortie ainsi que le corps de base font partie d'un engrenage cycloïdal qui a au moins une roue (140) à denture (141) intérieure, au moins un corps (150, 150') de sortie monté tournant par rapport à la roue (140), ainsi qu'un arbre (110) d'entrée ayant au moins un tronçon (117, 117') excentré ayant une excentricité (e), sur lequel une roue (130) ayant une denture (133) extérieure et engrenant avec la denture intérieure est montée tournante, dans lequel pour deux corps (150, 150') de sortie au moins une roue (130) est montée entre les corps (150, 150') de sortie, ainsi qu'un dispositif qui est disposé entre la roue (130) et le corps (150, 150') de sortie et qui transforme le mouvement planétaire de la roue (130) en un mouvement de rotation du corps de sortie, dans lequel le dispositif a au moins un corps (134) cylindrique qui s'étend dans la direction axiale de la roue (130) et qui est monté tournant dans un organe (170), et dans lequel le corps (34) est relié à la roue (30) fonctionnellement, l'organe (170) est monté tournant dans une ouverture (154) du corps (150, 150') de sortie et l'axe du corps (34) est à une distance de l'axe (154a) de l'ouverture (154) correspondant à l'excentricité (e).
